(19) Europäisches Patentamt
European Patent Office
Office européen des brevets

(11) **EP 4 664 065 A1**

(12) **EUROPÄISCHE PATENTANMELDUNG**

(43) Veröffentlichungstag:
**17.12.2025   Patentblatt 2025/51**

(21) Anmeldenummer: **25183050.1**

(22) Anmeldetag: **16.06.2025**

(51) Internationale Patentklassifikation (IPC):
**G01B 11/275** (2006.01)

(52) Gemeinsame Patentklassifikation (CPC):
**G01B 11/2755;** G01B 2210/28

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **14.06.2024  DE 102024116884**

(71) Anmelder:
• **Wilkinson, Michael
28359 Bremen (DE)**

• **Frese, Nils
28355 Bremen (DE)**
• **Stern, Phillip
28215 Bremen (DE)**

(72) Erfinder: **Wilkinson, Michael
28359 Bremen (DE)**

(74) Vertreter: **Eisenführ Speiser
Patentanwälte Rechtsanwälte PartGmbB
Postfach 10 60 78
28060 Bremen (DE)**

(54) **SYSTEM ZUR ACHSVERMESSUNG AN EINEM KRAFTFAHRZEUG**

(57)    Die Erfindung betrifft ein portables System (100) zur Achsvermessung an einem Kraftfahrzeug (200), insbesondere einem Rennsportfahrzeug, welches eine erste Fahrzeugseite (205), eine gegenüberliegende zweite Fahrzeugseite (207), eine Vorderachse (209) mit zwei vorderen Radnaben (201, 204) und eine Hinterachse (211) mit zwei hinteren Radnaben (202, 203) aufweist, wobei das System (100) vier Messköpfe (3, 5, 7, 9) aufweist, die gemeinsam eine Messeinrichtung (1) ausbilden, wobei die Messköpfe (3, 5, 7, 9) dazu eingerichtet sind, in einer vorgegebenen Relativposition zu den Radnaben (201, 202, 203, 204) installiert zu werden. Es wird vorgeschlagen, **dass** die Messeinrichtung (1) dazu eingerichtet ist, mittels Emission und Detektion senkrecht zu den Radnaben (201, 202, 203, 204) gerichteter Strahlung (19) eine Einzelspur ($\varphi_{VL}$, $\varphi_{VR}$, $\varphi_{HL}$, $\varphi_{HR}$) jeder Radnabe relativ zu einer Längsachse des Fahrzeugs zu bestimmen, die Abstände der Messköpfe in Richtung der Radnaben (201, 202, 203, 204) für die vorderen Radnaben (201, 204) und die hinteren Radnaben (202, 203) zu bestimmen, und aus den bestimmten Einzelspuren ($\varphi_{VL}$, $\varphi_{VR}$, $\varphi_{HL}$, $\varphi_{HR}$) und den bestimmten Abständen der Messköpfe einen Datensatz (Z) aus Achsvermessungsparametern ($Z_1$, $Z_2$, $Z_3$) zu berechnen und den Datensatz (Z) zur Darstellung bereitzustellen.

Fig. 1

**Beschreibung**

Die vorliegende Erfindung betrifft ein portables System zur Achsvermessung an einem Kraftfahrzeug, insbesondere einem Rennsportfahrzeug, welches eine erste Fahrzeugseite, eine gegenüberliegende zweite Fahrzeugseite, eine Vorderachse mit zwei vorderen Radnaben und eine Hinterachse mit zwei hinteren Radnaben aufweist, wobei das System vier Messköpfe aufweist, die gemeinsam eine Messeinrichtung ausbilden, wobei die Messköpfe dazu eingerichtet sind, in einer vorgegebenen Relativposition zu den Radnaben installiert zu werden.

Unter dem Begriff der Achsvermessung wird erfindungsgemäß insbesondere die Position und Ausrichtung der Radnaben relativ zueinander verstanden, weil sie die Position der Räder am Fahrzeug definieren, was wiederum entscheidenden Einfluss auf die fahrdynamischen Eigenschaften des Fahrzeugs hat. Achsvermessung wird angewendet bei konventionellen Kraftfahrzeugen, um die Fahrwerke der Fahrwerke auf Beschädigungen zu untersuchen. Achsvermessung ist vor allem aber auch ein relevantes Werkzeug im Rennsport, wo mittels Feinjustage der Stellung der Räder des Fahrzeugs das Verhalten des Fahrzeugs auf der Rennstrecke entscheidend beeinflusst wird, unter anderem die Spurtreue, das Einlenkverhalten und das Haftvermögen der Räder bei Kurvenfahrten.

Es sind im Stand der Technik stationäre Systeme zur Achsvermessung bekannt, die als ortsfest installierte Messstände beispielsweise in KFZ-Werkstätten vorgesehen werden, und in denen die Stellung der Radnaben des Fahrzeugs mit verschiedenen Messverfahren ausgewertet werden können, beispielsweise mittels Kamerasystemen, oder mittels optischer Messverfahren. Derartige Systeme funktionieren zwar grundlegend zufriedenstellend, was die Aussagekraft der Messergebnisse angeht, sie sind aber mit hohen Kosten verbunden und eignen sich nicht für einen Betrieb im Rennsport oder auch für eine Verwendung an Orten fernab solcher Werkstätten. Die Erfindung betrifft demgegenüber portable Systeme zur Achsvermessung, worunter verstanden wird, dass die Systeme von einer oder zwei Personen getragen werden können, und an verschiedenen Einsatzorten zum Einsatz gebracht werden können.

Es sind portable Messsysteme für die Achsvermessung bekannt, die einzelne Messungen bestimmter geometrischer Parameter der Radnaben zulassen. Solche Systeme sind notwendig und werden angewandt, um beispielsweise an der Rennstrecke in den Boxengassen die Justage und Reparatur der Fahrwerke der Fahrzeuge an einem Rennwochenende zu ermöglichen. Es ist hierbei bekannt, Messeinrichtungen zu verwenden, bei denen mittels eines an der Radnabe befestigten Laserpointers in Längsrichtung des Fahrzeugs eine Messtafel angestrahlt wird, um auf die Schrägstellung, d. h. Spur, der jeweiligen Nabe relativ zur Längsachse des Fahrzeugs schließen zu können. Es ist ferner ebenso bekannt, Achsparameter wie die Spurweite mit portablen Messsystemen zu erfassen, indem beispielsweise entsprechend dimensionierte Längenmaßstäbe in Querrichtung unter dem Fahrzeug hindurchgeschoben werden, um dann bestimmte Referenzmarkierungen anzupeilen, über welche die Spurweite festgestellt werden kann. Es ist auch bekannt, den Sturz von Radnaben mittels Inklinometern zu messen. Der Radstand eines Fahrzeugs wird ebenso üblicherweise analog gemessen.

Die Berechnung der Fahrwerksgeometrie und insbesondere der Gesamtspuren der Vorderachse und Hinterachse erfordert hierbei allerdings eine Vielzahl einzelner Messungen und Berechnungen, die im exemplarischen Rennsporteinsatz von den Renningenieuren vorgenommen werden müssen. Es werden hierzu eine Vielzahl von Einzelmessungen vorgenommen und dann in einer Datenverarbeitung zusammengeführt, oder manuell zum Ausrechnen der Spurwerte und anderen Achsvermessungsparametern ausgewertet. Der Zeitaufwand hierfür ist beträchtlich, und Zeit ist insbesondere im Rennsport eine knappe Ressource, wenn an einem Rennwochenende nicht nur ein, sondern teilweise auch mehrere Fahrzeuge von den Renningenieuren bearbeitet werden müssen.

Vor diesem Hintergrund lag der Erfindung die Aufgabe zugrunde, ein portables System zur Achsvermessung eines Kraftfahrzeugs anzugeben, welches die vorstehend beschriebenen Nachteile möglichst weitgehend überwindet. Insbesondere lag der Erfindung die Aufgabe zugrunde, ein solches System dahingehend zu verbessern, dass die Achsvermessung kosten- und zeiteffizient durchgeführt werden kann, ohne die Präzision bei der Achsvermessung zu kompromittieren.

Die Erfindung löst die ihr zugrundeliegende Aufgabe bei einem System der eingangs bezeichneten Art, indem die Messeinrichtung dazu eingerichtet ist, mittels Emission und Detektion senkrecht zu den Radnaben gerichteter Strahlung eine Einzelspur jeder Radnabe relativ zu einer Längsachse des Fahrzeugs zu bestimmen, die Abstände der Messköpfe in Richtung der Radnaben für die vorderen Radnaben und die hinteren Radnaben zu bestimmen, und aus den bestimmten Einzelspuren und den bestimmten Abständen der Messköpfe einen Datensatz aus Achsvermessungsparametern zu berechnen, und den Datensatz zur Darstellung bereitzustellen.

Unter dem gemeinsamen Ausbilden der Messeinrichtung mittels der Messköpfe ist zu verstehen, dass die Messköpfe zumindest teilweise miteinander in Wirkverbindung stehen, d. h. funktional miteinander gekoppelt werden, um beispielsweise Daten auszutauschen. Die Erfindung macht sich die Erkenntnis zunutze, dass durch das Installieren der Messköpfe in der vorgegebenen Relativposition, also dem mittelbaren oder unmittelbaren Montieren der Messköpfe an den Radnaben in einer Referenzposition, eine sehr einfache und wiederholgenaue Installation des Messsystems am Fahrzeug ermöglicht wird. Durch das Installieren der Messköpfe in der vorgenannten Art und Weise wird es entbehrlich, zusätzlich Referenzmarkierungen am Vermessungsort vorzusehen, wie es beispielsweise im Stand der Technik noch

**EP 4 664 065 A1**

erfolgen musste: Bislang war es beispielsweise üblich, Referenzgeometrien für das Fahrzeug mittels Bindfäden für die Vermessung abzuspannen und/oder Klebemarkierungen am Boden unter dem Fahrzeug anzubringen. Dadurch, dass die Messköpfe sowohl Geometrieinformationen in Längsrichtung des Fahrzeugs bestimmen können, mittels Emission senkrecht zu den Radnaben gerichteter Strahlung von dem einen Messkopf und Detektion jener am anderen Messkopf auf derselben Fahrzeugseite wird unmittelbar das Winkelverhältnis der beiden Einzelspuren auf einer Fahrzeugseite bekannt, weil die Position der Messköpfe bekannt ist, und zudem die Abstandsmessung in Richtung der Radnaben, also im Wesentlichen in Querrichtung des Fahrzeugs, zugleich die Ausrichtung und Relativposition der Messköpfe zueinander eindeutig festlegt.

Die vier Messköpfe können also durch ihre Wechselbeziehung zueinander in Längsrichtung auf jeweils einer Fahrzeugseite, und in Querrichtung an der Vorderachse sowie an der Hinterachse, simultan alle Messgrößen bereitstellen, die zum Ermitteln der Einzelspuren jeder Radnabe benötigt sind, und zur Ermittlung der Spurweite sowie des Radstandes. Es wird durch das erfindungsgemäße Messsystem daher möglich, in einem einzigen Messdurchgang einen Datensatz bereitzustellen, beispielsweise für eine visuelle Darstellung auf einem Computer, Mobilgerät, und dergleichen, ohne dass eine Vielzahl von Einzelmessungen und Berechnungen durchgeführt werden müssen. Der Zeitaufwand wird durch die Erfindung signifikant reduziert. Jeder Radnabe ist eine Rotationsachse, d.h. Radachse zugeordnet werden. Die Formulierung "senkrecht zur Radnabe" bedeutet also in diesem Zusammenhang eine Ausrichtung senkrecht zur Rotationsachse, wohingegen die Angabe "in Richtung der Radnabe" eine Ausrichtung parallel zu jener Rotationsachse bedeutet.

Mit anderen Worten kommunizieren beispielsweise die Messköpfe auf der ersten Fahrzeugseite derart miteinander, dass der Messkopf an der Vorderachse eine gerichtete Strahlung senkrecht zur vorderen Radnabe auf der ersten Fahrzeugseite nach hinten abstrahlt und der hintere Messkopf auf der ersten Fahrzeugseite diese Strahlung detektiert. Über die Auftreffposition dieser gerichteten Strahlung an der Hinterachse auf der ersten Fahrzeugseite wird eine erste relevante Information für die Einzelspur an der Radnabe des vorderen Messkopfs auf der ersten Fahrzeugseite bekannt. Gleichermaßen emittiert der Messkopf an der Hinterachse auf der ersten Fahrzeugseite seinerseits eine gerichtete Strahlung senkrecht zu der Radnabe an der Hinterachse der ersten Fahrzeugseite, deren Auftreffposition wiederum von dem Messkopf der Vorderachse der ersten Fahrzeugseite detektiert werden kann, womit eine weitere relevante Position für die Einzelspur der Radnabe an der Hinterachse auf der ersten Fahrzeugseite unmittelbar ermittelt wird. Das gleiche gilt für die zweite Fahrzeugseite.

In einer vorteilhaften Weiterbildung der Erfindung umfasst der Datensatz eine, mehrere oder sämtliche der folgenden Achsvermessungsparameter: Eine Gesamtspur für die Vorderachse und/oder eine Gesamtspur für die Hinterachse; eine Spurweite für die Vorderachse und/oder eine Spurweite für die Hinterachse; und/oder einen Radstand, d. h. den Abstand in Längsrichtung des Fahrzeugs zwischen der Vorderachse und der Hinterachse.

In einer weiteren bevorzugten Ausführungsform weist die Messeinrichtung eine Auswerteinheit auf, welche dazu eingerichtet ist, die Berechnung des Datensatzes vorzunehmen und den Datensatz zur Darstellung bereitzustellen, beispielsweise auf einer webbasierten Benutzeroberfläche, vorzugsweise mittels einer drahtlosen Kommunikationsschnittstelle. Die Messeinrichtung kann eine dedizierte Rechnereinheit sein, die zusätzlich zu den Messköpfen im System bereitgestellt wird, oder sie kann in einen oder mehreren der Messköpfe baulich integriert sein. Die Messeinrichtung weist zur Kommunikation mit den Messköpfen eine entsprechende Kommunikationsschnittstelle auf, sowie Prozessor- und Speichermittel zum Durchführen der nötigen Berechnungen und Abspeichern der Achsvermessungsparameter aus den bestimmten Messgrößen der Messköpfe. Der Rechenaufwand ist gemäß der Erfindung überschaubar, weil über die bekannten Positionen und Ausrichtungen der Messköpfe und der Messmittel an den Messköpfen lediglich vergleichsweise einfache trigonometrische Berechnungen nötig sind. Zum Bereitstellen des Datensatzes mit den Achvermessungsparametern zur Anzeige auf einer , vorzugsweise webbasierten, Benutzeroberfläche ist es in dieser Ausführungsform ausreichend, wenn der Benutzer über die drahtlose Kommunikationsschnittstelle, oder eine andere vorgesehene Kommunikationsschnittstelle, eine Verbindung zu der Auswerteinheit aufnimmt, und die Benutzeroberfläche auf seinem Endgerät anzeigen lässt. Hierzu können Mobilgeräte wie Laptops, Tablets oder Mobiltelefone, oder stationäre Computer verwendet werden.

In einer weiteren bevorzugten Ausführungsform sind die Messköpfe dazu eingerichtet, jeweils an einem Radnabenständer montiert zu werden, welcher seinerseits dazu eingerichtet ist, reversibel lösbar mit der zugeordneten Radnabe verbunden zu werden. Radnabenständer sind allgemein bekannt und werden im Rennsport dazu verwendet, das Fahrzeug ohne Reifen in einer horizontalen Ausrichtung zu lagern, während Arbeiten am Fahrwerk vorgenommen werden.

Die Messköpfe werden vorzugsweise jeweils an einer identischen Referenzposition des Nabenständers befestigt, sodass jeder Messkopf die gleiche Relativposition zur Radnabe und vor allen Dingen zur Rotationsachse der Radnabe aufweist, wenn er installiert ist.

In einer weiteren bevorzugten Ausführungsform weisen die Messköpfe an der Vorderachse und/oder an der Hinterachse für die erste Fahrzeugseite einen ersten Messkopf auf, welcher zwei horizontal in einem vorgegebenen Abstand zueinander angeordnete Abstandsmessaufnehmer aufweist, welche in Richtung der Radnabe ausgerichtet sind.

Ferner weisen die Messköpfe vorzugsweise für die zweite Fahrzeugseite einen zweiten Messkopf auf, welcher mindestens eine, vorzugsweise zwei, ebenfalls horizontal, vorzugsweise in demselben vorgegebenen Abstand, zueinander beabstandeter Reflexionsflächen aufweist, welche in Richtung der Radnabe ausgerichtet und zur Reflexion von Messsignalen der Abstandsmesser eingerichtet sind. Durch das Vorsehen zwei zueinander beabstandeter Abstandsmessaufnehmer, die im Wesentlichen in Querrichtung des Fahrzeugs messen, lässt sich die Spurweite von der ersten Fahrzeugseite zur zweiten Fahrzeugseite hinüber unabhängig vom Lenkwinkel und unabhängig von der Einzelspur der jeweiligen Radnaben zuverlässig ermitteln, weil die unterschiedlichen Abstände, die die Abstandsmessaufnehmer jeweils messen, sich gegenseitig ausgleichen. Zur Reflexion durch den zweiten Messkopf kann eine einzelne durchgehende Reflexionsfläche verwendet werden, es können aber auch zwei dedizierte Reflexionsflächen vorgesehen werden, die von den jeweiligen Abstandsmessaufnehmern des ersten Messkopfs auf der anderen Fahrzeugseite angestrahlt werden. Der apparative Aufwand wird durch das Vorsehen der Reflexionsflächen an dem zweiten Messkopf reduziert, und die Portabilität des Systems insgesamt verbessert.

In einer weiteren bevorzugten Ausführungsform sind die Abstandsmessaufnehmer als optische Sensoren, vorzugsweise als Laserabstandssensoren, LIDAR-Sensoren, oder als Radarsensoren, oder als (Ultra-)Schallsensoren ausgebildet.

In einer weiteren bevorzugten Ausführungsform weist wenigstens einer der Messköpfe auf der ersten Fahrzeugseite einen horizontal und senkrecht zur Radnabe ausgerichteten Strahl-Emitter auf, beispielsweise einen Laser-Emitter, und wenigstens einer der Messköpfe auf der ersten Fahrzeugseite weist einen horizontal und senkrecht zur Radnabe ausgerichteten Strahl-Detektor auf, beispielsweise einen Fotodioden-Array, zur Bestimmung der Auftreffposition des emittierten Strahls auf dem Messkopf. Der Strahlemitter und der Strahl-Detektor befinden sich an einer vorgegebenen Position auf dem Messkopf, sodass die Auftreffposition auf dem Strahl-Detektor zugleich die Auftreffposition relativ zur Radnabe liefert, und damit das Berechnen der jeweiligen Spuren der Radnaben erleichtert.

Vorzugsweise weisen beide Messköpfe auf der ersten Fahrzeugseite einen solchen Strahl-Emitter und einen solchen Strahl-Detektor auf.

In einer weiteren bevorzugten Ausführungsform weist wenigstens einer der Messköpfe auf der zweiten Fahrzeugseite einen horizontal und senkrecht zur Radnabe ausgerichteten Strahl-Emitter, beispielsweise einen Laser-Emitter, auf, und wenigstens einer der Messköpfe auf der zweiten Fahrzeugseite weist einen horizontal und senkrecht zur Radnabe ausgerichteten Strahl-Detektor, beispielsweise einen Fotodioden-Array, zur Bestimmung der Auftreffposition des emittierten Strahls auf den Messkopf auf. Auch hier sind wiederum vorzugsweise beide Messköpfe auf der zweiten Fahrzeugseite so ausgebildet, dass sie einen solchen Strahl-Emitter und einen solchen Strahl-Detektor aufweisen. Die Gefahr einer Fehlbedienung des erfindungsgemäßen Systems wird hierdurch reduziert. Die Detektoren auf der ersten Fahrzeugseite sind miteinander austauschbar, und die Detektoren auf der zweiten Fahrzeugseite sind ebenfalls miteinander austauschbar. Es ist auch möglich, einen Kreuztausch vorzunehmen, wenn, wie in einer der weiter oben beschriebenen Ausführungsformen, an der Vorderachse und an der Hinterachse jeweils ein erster Messkopf und ein zweiter Messkopf vorhanden sind, bei denen der erste Messkopf die in Querrichtung arbeitenden Abstandsmessaufnehmer aufweist, und der zweite Messkopf die in Querrichtung ausgerichteten Reflexionsflächen.

In einer weiteren bevorzugten Ausführungsform ist der Strahl-Emitter dazu eingerichtet, einen gepulsten Strahl zu emittieren, vorzugsweise einen pulsweitenmodulierten Strahl, und der Strahl-Detektor ist dazu eingerichtet, eintreffende Strahlen mit dem korrespondierenden Puls, vorzugsweise der korrespondierenden Modulation, zu detektieren. Durch das Verwenden modulierter Strahlpulse kann die messtechnische Erfassung der gerichteten Strahlung weitgehend unabhängig vom Umgebungslicht gemacht werden, was die Robustheit des Messsystems deutlich verbessert.

In einer weiteren bevorzugten Ausführungsform, in welcher der Strahl-Detektor ein Fotodioden-Array aufweist, weisen die Dioden des Arrays einen vorbestimmten Abstand zueinander auf, und der Strahl-Detektor weist eine Streulinse auf, welche den Dioden vorgeschaltet und dazu eingerichtet ist, den eintreffenden Strahl auf eine Querschnittsfläche aufzuweiten, welche mehrere der Dioden überstreicht. Vorzugsweise ist die Streulinse dazu eingerichtet, den Strahl derart aufzuweiten, dass die aufgeweitete Querschnittsfläche des eintreffenden Strahls fünf oder mehr Dioden, besonders bevorzugt sieben oder mehr Dioden, überstreicht.

Weiter vorzugsweise ist die Messeinrichtung dazu eingerichtet, die Dioden einzeln abzutasten und aus den erfassten Signalen die Auftreffposition des Strahls auf dem Array zu interpolieren. Vorzugsweise weist die Messeinrichtung diesbezüglich einen Analog-Digital-Wandler (ADC) und einen Multiplexer auf, und etwaig weitere benötigte elektronische Komponenten. Durch das Aufweiten der eintreffenden Strahlen auf eine mehrere Dioden überstreichende Querschnittsfläche werden also mehrere Dioden durch den eintreffenden Strahl angesprochen, und dies im Wege der Abtastung von der Messeinrichtung ermittelt. Aus der Intensität, oder der Änderung der Intensität, der von den Dioden erfassten Strahlung werden also mehrere Signalpeaks erfasst, und durch Abgleich der Maxima dieser Peaks kann auch ein gewissermaßen virtueller Peak einer über die Einzelpeaks überlagerten Intensitätsverteilungskurve ermittelt werden, der in Wirklichkeit nicht genau auf einer Diode, sondern zwischen zwei Dioden liegt. Durch die Verwendung der Streulinse und das Abtasten der Dioden mit nachgeschalteter Interpolation wird also die Ortsauflösung des Fotodioden-Arrays deutlich über den eigentlichen Abstand der Dioden zueinander erhöht.

In einer weiteren bevorzugten Ausführungsform ist die Messeinrichtung dazu eingerichtet, ein Frequenzspektrum des Umgebungslichts zu ermitteln und in Abhängigkeit des ermittelten Spektrums die Modulationsfrequenz des Pulses für den Strahl-Emitter und den Strahl-Detektor auszuwählen. Auf diese Weise kann ausgeschlossen werden, dass zufällig im Umgebungslicht vorhandene Lichtanteile das Messergebnis systematisch verfälschen.

Die Erfindung ist vorstehend in einem ersten Aspekt unter Bezugnahme auf das System als Ganzes beschrieben worden. In einem zweiten Aspekt betrifft die Erfindung ferner einen Messkopf für ein System zur Achsvermessung in einem Kraftfahrzeug, insbesondere einem Rennsportfahrzeug, welches eine erste Fahrzeugseite, eine gegenüberliegende zweite Fahrzeugseite, eine Vorderachse mit zwei vorderen Radnaben und eine Hinterachse mit zwei hinteren Radnaben aufweist, insbesondere für ein System nach einer der vorstehend beschriebenen bevorzugten Ausführungsformen des ersten Aspekts. Die Erfindung löst die ihr zugrundeliegende Aufgabe bei einem solchen Messkopf, indem der Messkopf eine Montageschnittstelle zur Installation an einer vorgegebenen Relativposition zu einer Radnabe aufweist, vorzugsweise mittelbar oder unmittelbar an einer Radnabe, besonders bevorzugt an einem Radnabenständer, welcher seinerseits dazu eingerichtet ist, reversibel lösbar mit der zugeordneten Radnabe verbunden zu werden, wobei der Messkopf einen Strahl-Emitter aufweist, der dazu eingerichtet ist, horizontal und senkrecht zur Radnabe gerichtete Strahlung zu emittieren, und einen horizontal und senkrecht zur Radnabe ausgerichteten Strahl-Detektor aufweist, der dazu eingerichtet ist, die Auftreffposition eines gerichteten Strahls zu bestimmen.

Der erfindungsgemäße Messkopf macht sich die gleichen Vorteile zunutze wie das System gemäß dem ersten Aspekt. Bevorzugte Ausführungsformen des erfindungsgemäßen Systems sind somit zugleich bevorzugte Ausführungsformen des Messkopfs des zweiten Aspekts und umgekehrt, weswegen zur Vermeidung von Wiederholungen auch auf die obigen Ausführungen verwiesen wird.

In einer bevorzugten Weiterbildung weist der Messkopf zwei horizontal in einem vorgegebenen Abstand zueinander beabstandete Abstandsmessaufnehmer auf, welche in Richtung der Radnabe ausgerichtet sind, und dazu eingerichtet sind, den Abstand zu einer korrespondierend ausgerichteten Reflexionsfläche an einem beabstandet angeordneten Messkopf zu bestimmen. Alternativ weist der Messkopf wenigstens eine, vorzugsweise horizontal in einem, vorzugsweise demselben, vorgegebenen Abstand zueinander beabstandeter Reflexionsflächen auf, welche in Richtung der Radnabe ausgerichtet und zur Reflexion von Messsignalen der Abstandsmessaufnehmer ausgerichtet ist bzw. sind.

In einer bevorzugten Ausführungsform weist der Messkopf ferner eine Auswerteinheit auf, welche mit einem oder mehreren weiteren Messköpfen signalleitend verbindbar ist, und dazu eingerichtet ist, auf Basis der vom Messkopf selbst sowie von dem oder den weiteren Messköpfen bestimmten Abständen und Auftreffpositionen die Einzelspuren einer oder mehrerer Radnaben zu bestimmen, und aus den bestimmten Einzelspuren und den bestimmten Abständen der Messköpfe einen Datensatz aus Achsvermessungsparametern zu berechnen und zur Darstellung bereitzustellen, vorzugsweise auf einer webbasierten Benutzeroberfläche, weiter vorzugsweise mittels einer drahtlosen Kommunikationsschnittstelle.

In einem weiteren Aspekt betrifft die Erfindung ein Verfahren zur Achsvermessung an einem Kraftfahrzeug, insbesondere einem Rennsportfahrzeug, welches eine erste Fahrzeugseite, eine gegenüberliegende zweite Fahrzeugseite, eine Vorderachse mit zwei vorderen Radnaben und eine Hinterachse mit zwei hinteren Radnaben aufweist. Das Verfahren löst die eingangs bezeichnete Aufgabe, indem es die Schritte umfasst:

- Installieren von vier Messköpfen an in einer vorgegebenen Relativposition zu den Radnaben;
- Bestimmen, mittels Emission und Detektion senkrecht zu den Radnaben gerichteter Strahlung, der Einzelspur jeder Radnabe relativ zu einer Längsachse des Fahrzeugs;
- Bestimmen der Abstände der Messköpfe in Richtung der Radnaben für die vorderen Radnaben und die hinteren Radnaben;
- Berechnen eines Datensatzes aus Achsvermessungsparametern aus den bestimmten Einzelspuren und den bestimmten Abständen der Messköpfe; und
- Bereitstellen des Datensatzes zur Darstellung.

Das Verfahren macht sich die gleichen Erkenntnisse und Vorteile zunutze wie das System gemäß dem ersten Aspekt und/oder der Messkopf gemäß dem zweiten Aspekt. Bevorzugte Ausführungsformen des erfindungsgemäßen Systems und des erfindungsgemäßen Messkopfs sind jeweils auch bevorzugte Ausführungsformen des erfindungsgemäßen Verfahrens und umgekehrt, weswegen zur Vermeidung von Wiederholungen auf die obigen Ausführungen verwiesen wird.

Vorzugsweise wird in dem Verfahren ein System nach einer der vorstehend beschriebenen bevorzugten Ausführungsformen des ersten Aspekts und/oder ein oder mehrere Messköpfe nach einer der bevorzugten Ausführungsformen des zweiten Aspekts verwendet.

Die Erfindung wird nachfolgend unter Bezugnahme auf die beigefügten Figuren anhand eines bevorzugten Ausführungsbeispiels näher beschrieben. Hierbei zeigen:

Fig. 1        eine schematische Darstellung des Systems zur Achsvermessung an einem Kraftfahrzeug gemäß einem bevorzugten Ausführungsbeispiel,

Fig. 2        einen Messkopf einer Messeinrichtung des Systems gemäß Fig. 1,

Fig. 3        einen weiteren Messkopf der Messeinrichtung des Systems gemäß Fig. 1, der zur Wechselwirkung mit dem Messkopf gemäß Fig. 2 eingerichtet ist,

Fig. 4a, b    eine schematische Darstellung des Fahrzeugs gemäß Fig. 1 mit angebrachter Messeinrichtung,

Fig. 5        eine schematische Detailansicht eines Teils der Messeinrichtung,

Fig. 6        eine weitere Detailansicht des Teils gemäß Fig. 5, und

Fig. 7        eine schematische, graphische Darstellung von Messgrößen der gemäß den Figuren 5 und 6 ausgebildeten Messeinrichtungen.

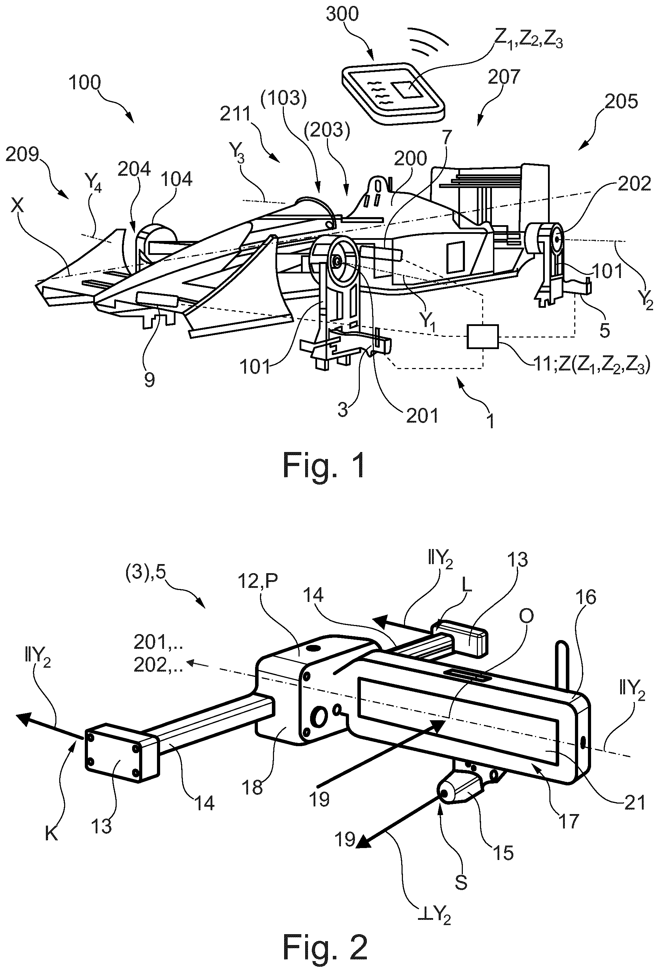

Fig. 1 zeigt ein portables System 100 zur Achsvermessung, welches an einem Kraftfahrzeug 200, im vorliegenden Beispiel ein Rennsportfahrzeug, installiert ist. Das Fahrzeug 200 weist insgesamt vier Radnaben 201, 202, 203, 204 auf. Die Radnaben 201, 202 sind auf einer ersten Fahrzeugseite 205 (links) angeordnet, während die Radnaben 203, 204 auf einer zweiten Fahrzeugseite 207 (rechts) angeordnet sind. Die Radnaben 201, 204 sind einer Vorderachse 209 zugeordnet, was systematisch zu verstehen ist, die Räder können wie im gezeigten Beispiel auch per Einzelradaufhängung am Fahrzeug 200 angeordnet sein. Die Radnaben 202, 203 sind einer Hinterachse 211 des Fahrzeugs 200 in gleicher Weise zugeordnet.

Das System 100 weist insgesamt vier Radnabenständer 101 auf, die beispielsweise über eine zentrale Radmutter mit der Radnabe 201, 202, 203, 204 verbunden sind. Über die Radnabenständer 101 wird eine horizontale Ausrichtung des Fahrzeugs 200 zur Fahrwerksvermessung und -einstellung erreicht.

Das System 100 weist ferner eine Messeinrichtung 1 auf, die dazu eingerichtet ist, die Einzelspuren der Radnaben 201 - 204 relativ zu einer Längsachse X des Fahrzeugs 200 zu bestimmen. Die Messeinrichtung 1 weist insgesamt vier Messköpfe 3, 5, 7, 9 auf, wobei jeweils ein Messkopf an einer Radnaben 201 - 204 mittelbar befestigt ist. Im gezeigten Ausführungsbeispiel sind die Messköpfe jeweils an den Radnabenständern 101 befestigt und weisen darüber eine vorgegebene Relativposition zu den Radnaben 201-204 auf, an denen die Radnabenständer ihrerseits befestigt sind. Das Erfassen der räumlichen Position und Ausrichtung der Messköpfe führt somit unmittelbar zur Ausrichtung der Radnaben 201 - 204 relativ zueinander.

Die Messeinrichtung 1 ist mittels der Messköpfe 3, 5, 7, 9 dazu eingerichtet, die Einzelspuren der Radnaben 201 - 204 mittels Emission und Detektion senkrecht zu den Radnaben 201 - 204 gerichteter Strahlung relativ zu der Längsachse X des Fahrzeugs zu bestimmen, sowie die Abstände der Messköpfe 3, 5, 7, 9 in Richtung der Radnaben 201 - 204 für die vorderen Radnaben 201 , 204 und für die hinteren Radnaben 202, 203 zu bestimmen. Die Messeinrichtung 1 ist ferner dazu eingerichtet, aus den bestimmten Einzelspuren und den bestimmten Abständen der Messköpfe senkrecht zur Längsachse X, beziehungsweise in Richtung der Radnaben 201 - 204, beziehungsweise der Radachsen $Y_1$, $Y_2$, $Y_3$, $Y_4$ der jeweiligen Radnaben 201 - 204 einen Datensatz aus Achsvermessungsparametern zu berechnen und den Datensatz Z zur Darstellung bereitzustellen. Der Aufruf und die Anzeige des Datensatzes kann beispielsweise über ein Anzeigegerät 300 erfolgen, welches über eine entsprechende, allgemein bekannte Kommunikationsschnittstelle die Informationen empfängt.

Zum Berechnen des Datensatzes weist das System eine Auswerteinheit 11 auf, die ihrerseits signalleitend mit den Messköpfen 3, 5, 7, 9 verbunden ist, beispielsweise mittels einer drahtlosen Kommunikationsschnittstelle, und die dazu eingerichtet ist, von den Messköpfen 3, 5, 7, 9 die Messwerte zu empfangen, welche von den Messköpfen geliefert werden. Die Auswerteinheit 11 ist in Fig. 1 als dediziertes Element gezeigt. Die Auswerteinheit 11 kann aber, und wird auch in bevorzugten Ausführungsbeispielen in einen, mehrere oder sämtliche der Messköpfe 3, 5, 7, 9 baulich integriert sein. Zur Datenverarbeitung weist die Messeinrichtung 1 in allgemein bekannter Art und Weise ein oder mehrere Prozessoren und Arbeits- sowie Datenspeicher auf, die hier nicht im Einzelnen dargestellt sind. Die Auswerteinheit 11 ist dazu eingerichtet, anhand der von der Messeinrichtung erhaltenen Messgrößen den Datensatz Z umfassend Achsvermessungsparameter $Z_1$ (Spur, insbesondere Gesamtspur), $Z_2$ (Spurweite), $Z_3$ (Radstand) zu berechnen, und abzuspeichern und/oder über einen Webserver und eine Kommunikationsschnittstelle für das Anzeigegerät 300 bereitzustellen.

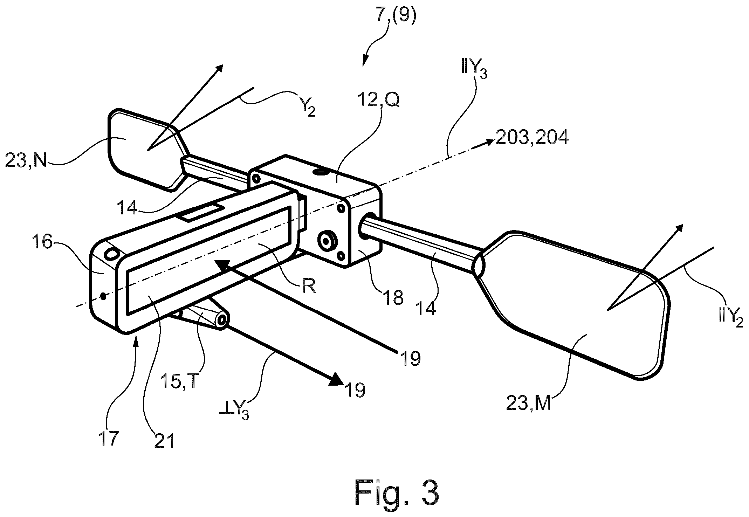

Der Aufbau der Messköpfe ist in den Figuren 2 und 3 näher beschrieben. In Fig. 2 ist exemplarisch der Messkopf 5 der Radnabe 202 hinten links am Fahrzeug 200 abgebildet. Der Messkopf 5 ist ein erster Messkopf. Für den Messkopf 3 an der Radnabe 201 vorne links am Fahrzeug 200 gilt spiegelbildlich dasselbe wie für den in Fig. 2 gezeigten Messkopf 5.

Der Messkopf 5 weist eine Montageschnittstelle 12 auf, die zur Befestigung in einer vorgegebenen Relativposition zu der Radnabe 202 eingerichtet ist. Hierüber wird ein Referenzpunkt P relativ zur Radnabe definiert. Von der Montageschnittstelle 12 ausgehend weist der Messkopf 5 zwei Ausleger 14 auf, an deren Enden jeweils ein Abstandsmessaufnehmer 13 angeordnet ist. Die Abstandsmessaufnehmer 13 sind dazu eingerichtet, den Abstand zu einem auf der gegenüberliegenden Fahrzeugseite, in diesem Fall der zweiten Fahrzeugseite 207, angeordneten Messkopf zu bestimmen. Hierzu definieren die Abstandsmessaufnehmer 13 einen ersten Referenzpunkt K und einen zweiten Referenzpunkt L in vorgegebenem Abstand zueinander. Die Abstandsmessaufnehmer 13 messen in einer Richtung parallel zu der Achse $Y_2$ der Radnabe 202.

Von der Montageschnittstelle 212 aus erstreckt sich in Richtung parallel zu der Radachse $Y_2$ der Radnabe 202 ein Strahlen-Detektor 17, der in einem Gehäuse 16 eingefasst ist und ein Fotodioden-Array 21 aufweist.

Ebenfalls weist der Messkopf 5 einen Strahlen-Emitter 15 auf, der in einem vorgegebenen Abstand zur Montageschnittstelle 12 angeordnet und dazu eingerichtet ist, einen gerichteten Strahl 19, beispielsweise einen gepulsten Laserstrahl, auszusenden, welcher im Wesentlichen horizontal und vor allem senkrecht zu der Radachse $Y_2$ ausgerichtet ist. Der Strahl-Emitter definiert einen referenzpunkt S, von dem aus der Strahl 19 ausgesandt wird. Der Referenzpunkt S hat einen bekannten Abstand zu dem Referenzpunkt P der Montageschnittstelle 12.

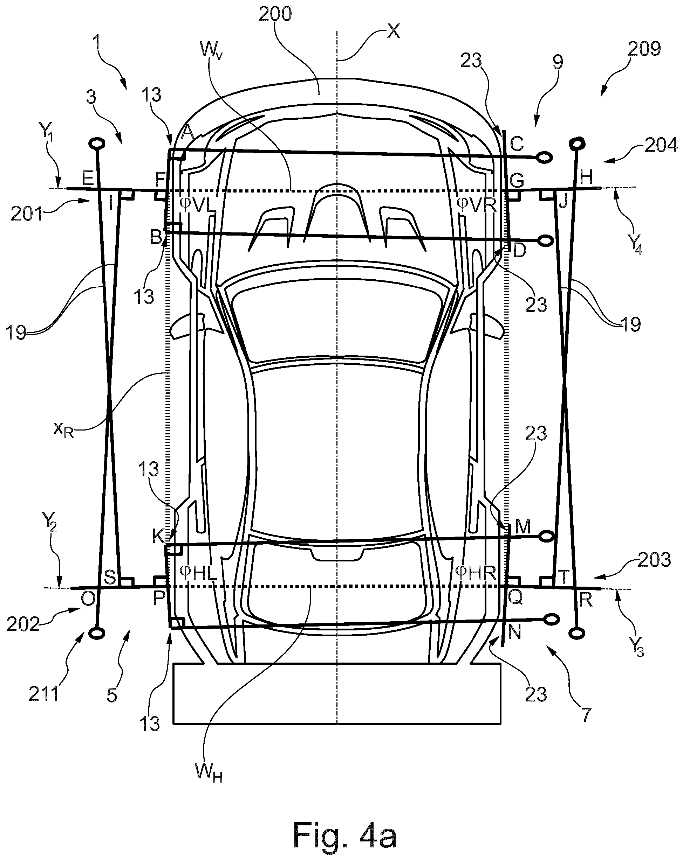

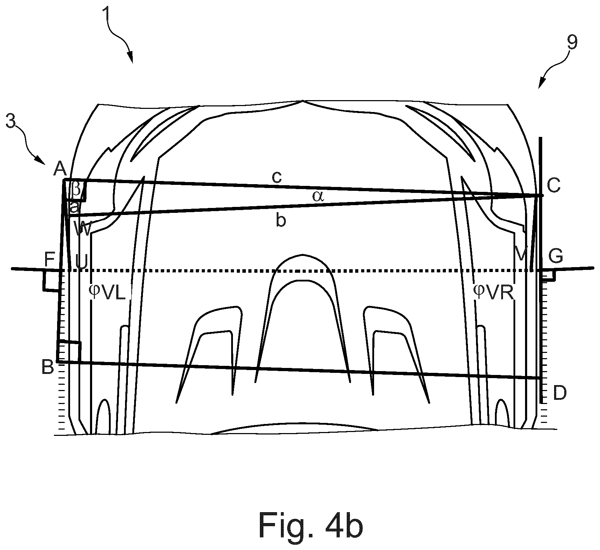

Der Strahlen-Detektor 17 ist dazu eingerichtet, ebensolche Strahlung 19 zu empfangen, die von einem auf derselben Fahrzeugseite, hier der Fahrzeugseite 205, an der anderen Radnabe, hier dann der Radnabe 201 vorne links angeordneten Strahlen-Emitter gleicher Art ausgesandt wird. Die gepulste Strahlung von dem jeweils anderen Messkopf trifft an einem Referenzpunkt O auf dem Array 21 ein. Aufgrund der unterschiedlichen Spurweite zwischen Vorderachse 209 und Hinterachse 211, und aufgrund der unterschiedlichen Einzelspuren an den Radnaben 201 - 204 ist der Abstand EO ein anderer als der Abstand PS. Hierauf wird näher in Bezug auf Fig. 4 eingegangen.

Die in Fig. 1 angedeutete Auswerteinheit 11 kann beispielsweise in dem Gehäuse 16 des Strahlendetektors 17 oder in einem Gehäuse 18 an der Montageschnittstelle 12 untergebracht werden.

Es ist grundsätzlich möglich, die Abstände der Messköpfe auf beiden Seiten des Fahrzeugs, also in Richtung der Radnaben der Radachsen $Y_1$ - $Y_4$ direkt zu messen. Es hat sich allerdings als vorteilhaft herausgestellt, die Abstandsmessaufnehmer nur auf einer Fahrzeugseite anzubringen, und daher die Messköpfe unterschiedlich auszubilden.

Während also im gezeigten Ausführungsbeispiel auf der ersten Fahrzeugseite 205 die ersten Messköpfe 3, 5 angeordnet und mit Abstandsmessaufnehmern ausgerüstet sind, sind auf der zweiten Fahrzeugseite 207 leicht abweichend ausgebildete zweite Messaufnehmer 7, 9 vorgesehen. Exemplarisch ist in Fig. 3 ein Messaufnehmer 9 für die Radnabe 203 hinten rechts am Fahrzeug 200 abgebildet. Der Messkopf 9 ist hinsichtlich des Strahlen-Detektors 17 und des Strahlen-Emitters 15 im Wesentlichen genauso aufgebaut wie die ersten Messköpfe 3, 5. Er weist allerdings anstelle der Abstandsmessaufnehmer 13 an seinen Auslegern 14 jeweils einen Reflektor 23 auf, welche über eine entsprechende Reflexionsfläche verfügt. Es wäre alternativ auch möglich, die Reflexionsflächen an einem durchgehenden Reflektor auszubilden. Die Reflexionsflächen können von den an gegenüberliegendem Messkopf, hier Messkopf 5, vorgesehenen Abstandsmessaufnehmern 13 erkannt und abstandsmäßig erfasst werden. Aus den zu erfassenden Abständen können die Spurweiten als Achsvermessungsparameter an der Vorderachse 209 und Hinterachse 211 erfasst werden.

Die Figuren 2 und 3 gelten sinnbildlich auch für die Messköpfe 3, 9 an der Vorderachse 209 des Fahrzeugs 200, bei ihnen sind lediglich die Strahl-Emitter 15 und die Strahl-Detektoren 17 spiegelbildlich angeordnet, um von dort aus gerichtete Strahlung in Richtung der Hinterachse 211 aussenden zu können, und entsprechend Strahlung von der Hinterachse 211 kommend detektieren zu können.

Die Reflexionsflächen 23 am Messkopf 9 definieren für die Abstandserfassung Referenzpunkte M und N. Die Montageschnittstelle 12 definiert einen Referenzpunkt U für die Lage relativ zur Radnabe. Der Strahl-Emitter 15 definiert Referenzpunkt T für den Ausgangspunkt der gerichteten Strahlung 19 an diesem Messkopf, und der Strahl-Detektor 17 des Messkopfs 9 erfasst einen Auftreffort R auf dem Array 21 für die Strahlung, die von dem anderen Messkopf 9 auf der zweiten Fahrzeugseite 207 zur Hinterachse 211 ausgesagt wird.

Nachfolgend wird unter Bezugnahme auf die Figuren 1 bis 4b ein Beispiel für eine erfindungsgemäße Achsvermessung beschrieben, in deren Rahmen ein Datensatz Z mit den mehreren Achsvermessungsparametern $Z_1$ bis $Z_3$ erstellt wird. Zugunsten einer knappen Darstellung wird die Berechnung für jeweils eine Nabe, bzw. eine Achse, vorgestellt, wobei das Verfahren für die weiteren Naben und die weitere Achse analog durchgeführt werden kann.

In Fig. 4a ist der Aufbau des Systems 100, und insbesondere der Messeinrichtung 1 am Fahrzeug 200 in abstrahierter geometrischer Form dargestellt. Die Positionierung der Messköpfe 3, 5, 7, 9 ist analog zu der schematischen Darstellung aus Fig. 1 vorgenommen worden. Die Messköpfe 3, 5 sind wie beschrieben sogenannte erste Messköpfe, die jeweils über Abstandsmessaufnehmer 13 verfügen, und die Messköpfe 7, 9 sind jeweils zweite Messköpfe, die anstelle der Abstandsmessaufnehmer 13 über korrespondierende Reflektoren 23 verfügen. Der Messkopf 3 verfügt über die Referenzpunkte A, B der Abstandsmessaufnehmer 13, den Referenzpunkt F der Montageschnittstelle, und den Referenzpunkt I für die Aussendung gerichteter Strahlung 19 in Richtung des Messkopfes 5. Der Punkt E am ersten Messkopf 3 wird über den Strahlen-Detektor 17 gemessen und über ihn der Abstand zur Montageschnittstelle ermittelt. Die Radnabe 201 weist eine Einzelspur $\varphi_{VL}$ auf relativ zur Längsachse X des Fahrzeugs 200.

In analoger Weise sind die Referenzpunkte C, D, G, Jam Messkopf 9 vergeben, und dort wird der Auftreffort H durch den Strahlen-Detektor des Messkopfs 9 erfasst. Die Radnabe 204 weist eine Einzelspur $\varphi_{VR}$ auf. Hinsichtlich der Messköpfe 5, 7 wird auf die Figuren 2, 3 verwiesen. Die Radnabe 202 weist eine Einzelspur $\varphi_{HL}$ auf, während die Radnabe eine Einzelspur $\varphi_{HR}$ aufweist. An der durch die Radnaben 201, 204 definierten Vorderachse 209 sind die Radnaben 201, 204 über eine Spurweite $W_V$ beabstandet, während an der Hinterachse 205 eine Spurweite $W_H$ vorhanden ist, wobei $W_V$= FG, und $W_H$ = PQ.

Die Messköpfe 3, 4, 7, und 9 werden in einer vorgegebenen Relativposition zu den Radnaben 201 - 204 des Fahrzeugs installiert, vorzugsweise mittels der Radnabenständer 101.

Die Strahl-Emitter 15 an den Referenzpunkten I, S, J, und T sind vorzugsweise Laser, welche von einer PWM-Quelle mit einer bestimmten Frequenz angetrieben werden und parallel senkrecht zu den Achsen Y1 - Y4 ausgerichtet sind.

E, G, O und Q stellen Auftreffpunkte der von den Strahl-Emittern ausgesandten gepulsten und gerichteten Strahlen dar, die von den Fotodioden-Arrays 21 detektiert werden. Vorzugsweise sind die Arrays 21 dazu eingerichtet, nur Lichtquellen erkennen, die mit der Frequenz der Strahl-Emitter 15 moduliert sind, um gegenüber normalen externen Lichtquellen immun zu sein. Diese Arrays 21 messen den Abstand zwischen den Radnaben 201 - 204, bzw. den Montageschnittstellen 12, und dem jeweiligen Auftreffpunkt, an dem der Laser auf das Array trifft (Abstände EF, GH, OP und QR).

Die Abstandsmessaufnehmer 13 sind vorzugsweise als Laser ausgebildet und dazu eingerichtet, die Abstände AC, BD, KM und LN messen. CD und MN stellen die referenzpunkte der Reflektoren 23 dar, die eine Messfläche für die Laserabstandssensoren bereitstellen. Dies liefert die Entfernungen AC, BD, KM und LN.

Die Auswerteinheit 11 berechnet aus diesen Werten als Achsvermessungsparameter $Z_1$ eine Gesamtspur (g) beider Achsen jeweils mit folgender Formel zu berechnen, am Beispiel der Vorderachs-Spur:

$$(1) \quad \gamma_{vorne} = \tan^{-1}\left(\frac{(BD-AC)}{AB}\right).$$

Aus diesen Werten berechnet die Auswerteinheit 11 ferner die Spurweite der jeweiligen Achse 205, 209, indem die Werte der jeweiligen Achse gemittelt werden. Zunächst werden die ungefähren Spurweiten wie folgt berechnet:

$$(2) \quad FG = \frac{(AC+BD)}{2}.$$

Aus den gemäß Gleichung (2) angenäherten Werten werden Näherungen für die einzelnen Spurwerte abgeleitet. Den Ausgangspunkt bilden hierfür Dreiecke entlang der Fahrzeuglänge aus, wobei die Alpha-Winkel die Spurwerte sind. Wir berechnen die angrenzenden Seiten dieser Dreiecke (a), am Beispiel der vorderen linken Radnabe 201:

$$(3) \quad a_{VL} = \left(OP + \left(\frac{PQ}{2}\right)\right) - \left(IF + \left(\frac{FG}{2}\right)\right).$$

Mit den ermittelten angrenzenden Seiten haben, berechnet sich Alpha für die Dreiecke wie folgt. Es wird zunächst geprüft, ob die einzelnen Werte beide das gleiche Vorzeichen oder entgegengesetzte Vorzeichen haben.

Bei gleichem Vorzeichen berechnet sich ein ungefährer Spurwert, wieder am Beispiel der vorderen linken Radnabe 201:

$$(4) \quad \varphi_{VL} = \gamma_{vorne} \Big/ \left(\frac{(a_{VL}+a_{VR})}{a_{VL}}\right).$$

Bei umgekehrtem Vorzeichen berechnet sich der ungefährer Spurwert, wieder am Beispiel der vorderen linken Radnabe 201:

$$(5) \quad \varphi_{VL} = \gamma_{vorne} \cdot \left(\frac{|a_{VL}|}{|a_{VL}|-|a_{VR}|}\right).$$

Bei umgekehrten Vorzeichen wird geprüft, ob aVL positiv oder negativ ist, und die ungefähren Phi-Werte werden entsprechend signiert. Anhand der so errechneten ungefähren Spurwerte wird anschließend eine genauere Spurbreite neu berechnet, vgl. Fig. 4b:

$$(6) \quad AU = \frac{AB}{2} \cdot \cos(\varphi_{VL}).$$

$$(7) \quad AW = AC \cdot \cos(90° - \varphi_{VL}).$$

$$(8) \quad CV = AU - AW.$$

$$(9) \quad FU = \frac{AB}{2} \cdot \sin(\varphi_{VL}).$$

$$(10) \quad VG = CV \cdot \tan(\varphi_{VR}).$$

$$(11) \quad CW = AC \cdot \cos(\varphi_{VL}).$$

$$(12) \quad FG = FU + CW + VG.$$

Die ungefähren Spurwerte können nun dazu verwendet werden, um mittel der Auswerteinheit 11 die durch Spur verursachte Fehlausrichtung der Messköpfe zu kompensieren. Die so korrigierten Werte werden zusammen mit den korrigierten Spurbreitenwerten verwendet, um die angrenzenden Seiten, beispielsweise aVL, der vorstehend genannten Dreiecke neu zu berechnen:

$$(13) \quad IF_{cor} = \frac{IF}{\cos(\varphi_{VL})}.$$

$$(14) \quad OP_{cor} = OP \cdot \cos(\varphi_{HL}) + OP \cdot \sin(\varphi_{HL}) \cdot \tan(\varphi_{VL}).$$

$$(15) \quad a_{VL} = \left( OP_{cor} + \left( \frac{PQ}{2} \right) \right) - \left( IF_{cor} + \left( \frac{FG}{2} \right) \right).$$

Anschließend die Auswerteinheit eine Iteration durchführen, indem die Gleichungen (2) ff. erneut ausgeführt werden, um genauere Spurwerte als Achsvermessungsparameter $Z_2$ abzuleiten. Der Prozess kann zur Verbesserung der Genauigkeit mehrmals ausgeführt werden.

Der Radstand ($X_R$) als dritter Achsvermessungsparameter $Z_3$ wird vorzugsweise folgendermaßen berechnet:

$$(16) \quad X_R = \left| \frac{a_{VR}}{\tan(\varphi_{VL})} \right|$$

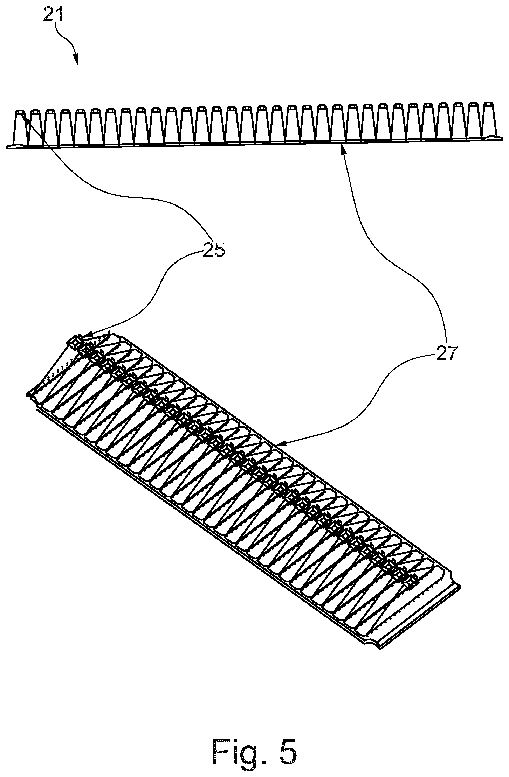

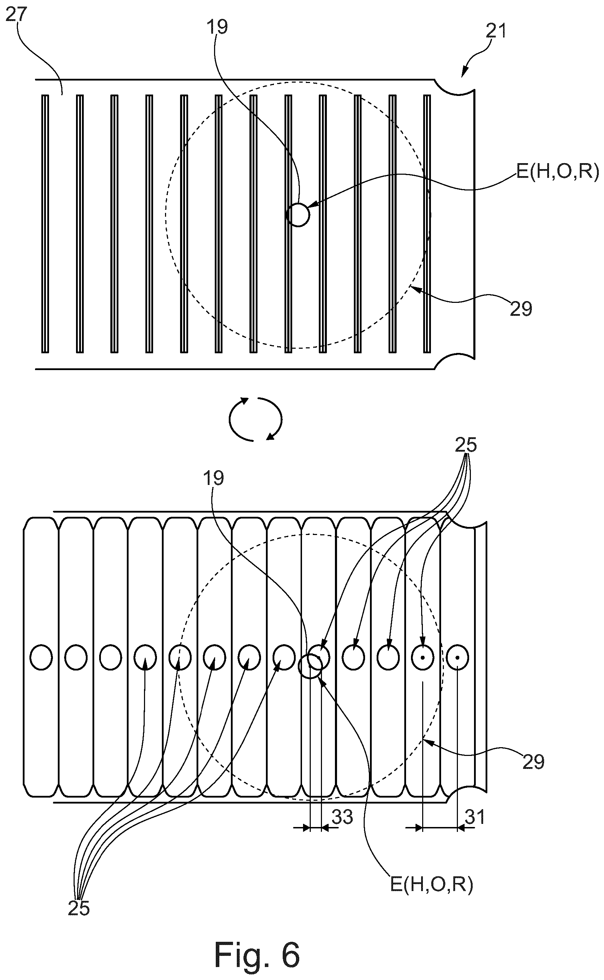

In Fig. 5 ist der grundsätzliche Aufbau des Fotodioden-Arrays 21 des Strahlungs-Detektors erläutert. Das Fotodioden-Array 21 weist eine Vielzahl Fotodioden 25 auf, im gezeigten Ausführungsbeispiel 32 Fotodioden 25, die in einer Reihe mit einem vorbestimmten Abstand zueinander angeordnet sind, vgl. Fig. 6. Den Fotodioden 25 vorgeschaltet sind eine Streulinse 27.

Die Fotodioden 25 werden verwendet, um die Position des auftreffenden Laserstrahls zu erfassen, wenn er auf die Linse 27 trifft, siehe hierzu auch Fig. 6.

Die Streulinse 27, dargestellt in Fig. 6 oben in einer Vorderansicht auf das Fotodioden-Array 21, hat die Funktion, den auftreffenden gerichteten Strahl 19, gezeigt ist hier exemplarisch der Auftreffort E aufzuweiten, sodass die Anzahl der angeregten Fotodioden größer ist als 1. Das gleiche gilt im Übrigen analog für die Auftrefforte H, O und R.

Der auftreffende Strahl 19 wird durch die Streulinse auf eine Fläche 29, vorzugsweise kreisförmig, aufgeweitet.

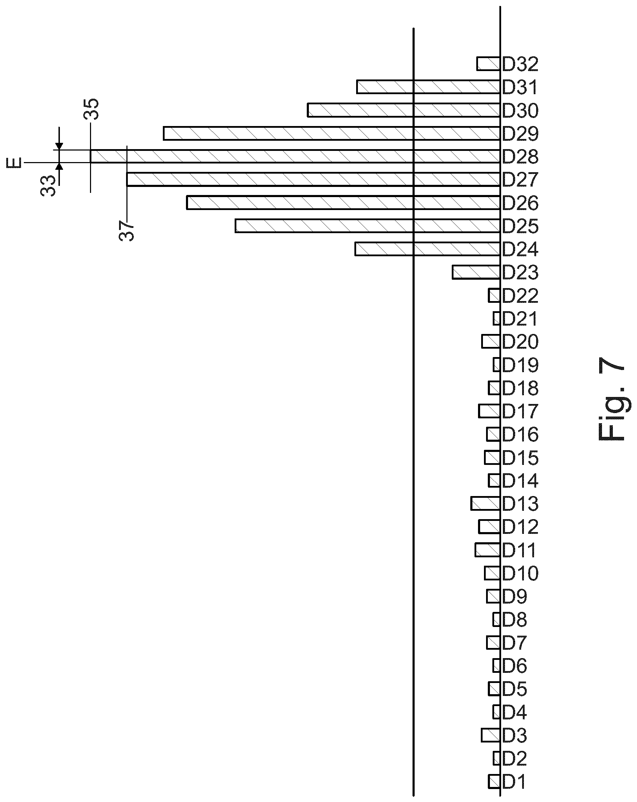

Fig. 6 unten zeigt eine rückwärtige Ansicht des Fotodioden-Arrays 21 mit den einzelnen Fotodioden 25. Im gezeigten Beispiel trifft der gerichtete Strahl 19 nicht exakt auf eine Fotodiode, sondern in einem leichten Versatz 33 dazu auf die Linse 27 auf. Ohne Streulinse würde die Messeinrichtung aufgrund der einzigen angeregten Fotodiode das Ergebnis auswerfen, dass der Auftreffort direkt am Ort jener Fotodiode wäre, auch wenn er es tatsächlich nicht ist. Die Auflösung des Fotodioden-Arrays ohne Streulinse würde also dem Abstand 31 zwischen den benachbarten Fotodioden entsprechen. Da aber aufgrund der Streulinse 27 eine Vielzahl von Fotodioden, im vorliegenden Beispiel acht oder mehr Fotodioden, angeregt werden, wird es möglich, aufgrund der Signalstärken, die die einzelnen Fotodioden erfassen, die exakte Auftreffposition mit einer deutlich höheren Genauigkeit als dem Abstand 31 der Fotodioden zueinander zu bestimmen, siehe hierzu Fig. 7.

Fig. 7 zeigt das Ergebnis einer Abtastung aller Fotodioden des Fotodioden-Arrays 21. Die Fotodiode D28 ist hierbei diejenige Diode mit dem höchsten Frequenzbetrag und stellt diejenige Diode dar, die den tatsächlichen Eintreffort E des eintreffenden Strahls 19 am nächsten ist. Sie wird als primäre Fotodiode, ihre Position als primäre Position bezeichnet. Die Diode D27 links davon weist einen höheren Frequenzbetrag als die Diode D29 auf, und ist deswegen diejenige Diode, die am zweitnächsten an dem Eintreffort E des gerichteten Strahls 19 liegt. Sie wird als die sekundäre Diode, ihre Position als sekundäre Position bezeichnet. In Fällen, in denen die Sekundärpositionen einen so geringen wert aufweist, dass ein vorbestimmter Schwellwert nicht erreicht oder überschritten wird, kann davon ausgegangen werden, dass der Auftreffort E sehr nahe an der Primärposition liegt, sodass die Position des eintreffenden Strahls über jene Diode ausschließlich ermittelt werden kann.

Falls die Sekundärgröße an der Sekundärposition jenen Schwellenwert überschreitet, kann mittels einer Interpolation, beispielsweise eines linearen Interpolationsverfahrens, die Auftreffposition des gerichteten Strahls zwischen den beiden Dioden ermittelt werden. Hierdurch ist die tatsächliche Auflösung des Fotodioden-Arrays 21 deutlich höher als es der Abstand zwischen den benachbarten Fotodioden vermuten ließe.

In Zusammenschau wird mit der Erfindung ein leistungsfähiges System vorgestellt, welches den Vorgang der Achsvermessung erleichtert und die Zeiteffizienz deutlich erhöht. Es wird aufgrund der bidirektionalen Abstandsmessung in Längs- und Querrichtung eine unmittelbare Berechnung und Darstellung der Achvermessungsparameter $Z_1$ - $Z_3$ möglich, ohne aufwändige Einmessarbeiten für separate Mess-Systeme vornehmen zu müssen.

Es ist insbesondere keine Anpassung der Tafeln für verschiedene Spurbreiten oder Sturzwerte nötig. Die Berechnungen können ohne manuelle Eingabe von Fahrzeugparametern erfolgen. Das System ist universell einsetzbar; es ist keine modellspezifischen Messskalen erforderlich. Es wird auch keine zusätzliche Ausrüstung für Lenkwinkelmessungen bei Nachlauf/Spreizung-Messungen notwendig, diese kann über integrierte 3D MEMS Technologie erfolgen.

Es ist in bevorzugten Ausführungsformen vorgesehen, dass die berechneten Achsvermessungsparameter und/oder die Messwerte exportierbar bereitgestellt werden, etwa in Dateiaustauschformaten wie PDF oder CSV.

Ein weiterer Vorteil der Erfindung ist ihre Nachrüstbarkeit für alle am Markt erhältlichen Radnabenständer und Radklammern.

In bevorzugten Ausführungsformen ist das System unbeeinflusst von externen Lichtquellen.

Die Messeinrichtung kann mit oder ohne Feigenschlagkompensation eingesetzt werden, wenn sie zusammen mit Radklemmern benutzt wird.

Es ist in bevorzugten Ausführungsformen auch vorgesehen, den Sturz der Radnaben zu berücksichtigen, um die theoretische Mittellinie des Fahrzeugs zu korrigieren und die Verschiebung zwischen den Strahl-Detektoren und den Abstandsmessaufnehmern auszugleichen.

Die vorliegende Erfindung bezieht sich jenseits der Achsvermessung in weiteren Aspekten auch auf ein System zum Bestimmen der Position eines Laserpunkts, der von einem modulierten Laser emittiert wird, mit Immunität gegenüber Umgebungslicht und Interferenz von externen Lichtquellen. Das System ist damit auch für Anwendungen wie laserbasierte Positionierung, Tracking-Systeme, Achsvermessung, maschinelles Sehen und Prüfen, Robotik und Automatisierung sowie Forschungs- und Entwicklungsaufgaben geeignet und erfindungsgemäß vorgesehen. Die Erfindung kann insbesondere in Systemen verwendet werden, die eine präzise Verfolgung oder Positionierung von Objekten erfordern, wie etwa Roboterarme oder andere mechatronische Systeme. Die Erfindung kann alternativ oder zusätzlich in Roboter- und Automatisierungssysteme integriert werden, die auf präzise Positionierung und Navigation angewiesen sind, wodurch ihre Genauigkeit und Leistung bei Aufgaben wie Materialhandhabung, Montage oder Inspektion verbessert wird.

Die Erfindung kann insbesondere in der Automobilindustrie für Achsvermessungsaufgaben angewendet werden, um eine richtige Ausrichtung von Fahrzeugrädern sicherzustellen, um die Sicherheit, Kraftstoffeffizienz, Fahrverhalten und Reifenlebensdauer zu verbessern. Die Erfindung kann ferner in Bildverarbeitungs- und Inspektionssystemen verwendet werden, um die Position spezifischer Merkmale oder Objekte zu identifizieren und zu lokalisieren, wodurch eine Qualitätskontrolle und Fehlererkennung in Herstellungsprozessen sichergestellt werden.

Die Erfindung kann in Forschungs- und Entwicklungsumgebungen für verschiedene wissenschaftliche und technische Anwendungen eingesetzt werden, darunter optische Messungen, Mikroskopie und andere Präzisionspositionierungsaufgaben.

Die Immunität gegenüber Umgebungslicht und Störungen durch externe Lichtquellen verbessert die Praktikabilität und Anwendbarkeit des Systems in einer Vielzahl von Anwendungsfällen erheblich.

Durch Aufrechterhaltung einer genauen Leistung selbst bei schwierigen Lichtverhältnissen erweist sich die Erfindung als besonders vorteilhaft für Anwendungen in Außenumgebungen, Industrieumgebungen mit variabler Beleuchtung oder Situationen, in denen mehrere Lichtquellen vorhanden sind.

Zusammenfassend bietet die vorliegende Erfindung auch in weiteren Aspekten jenseits der Achsvermessung ein zuverlässiges und vielseitiges System zum Bestimmen der Position eines Laserpunkts, der von einem modulierten Laser emittiert wird, mit Immunität gegenüber Umgebungslicht und Interferenz von externen Lichtquellen. Die Komponenten, Prozesse und potenziellen Anwendungen der Messeinrichtung tragen zur Weiterentwicklung präziser Positionierungs- und Trackingsysteme in verschiedenen Branchen und Bereichen bei.

**Patentansprüche**

1. Portables System (100) zur Achsvermessung an einem Kraftahrzeug (200), insbesondere einem Rennsportfahrzeug, welches eine erste Fahrzeugseite (205), eine gegenüberliegende zweite Fahrzeugseite (207), eine Vorderachse (209) mit zwei vorderen Radnaben (201, 204) und eine Hinterachse (211) mit zwei hinteren Radnaben (202, 203) aufweist, wobei das System (100) vier Messköpfe (3, 5, 7, 9) aufweist, die gemeinsam eine Messeinrichtung (1) ausbilden, wobei die Messköpfe (3, 5, 7, 9) dazu eingerichtet sind, in einer vorgegebenen Relativposition zu den Radnaben (201, 202, 203, 204) installiert zu werden,
   **dadurch gekennzeichnet, dass** die Messeinrichtung (1) dazu eingerichtet ist,

   - mittels Emission und Detektion senkrecht zu den Radnaben (201, 202, 203, 204) gerichteter Strahlung (19) eine Einzelspur ($\varphi_{VL}$, $\varphi_{VR}$, $\varphi_{HL}$, $\varphi_{HR}$) jeder Radnabe relativ zu einer Längsachse des Fahrzeugs zu bestimmen,
   - die Abstände der Messköpfe in Richtung der Radnaben (201, 202, 203, 204) für die vorderen Radnaben (201, 204) und die hinteren Radnaben (202, 203) zu bestimmen, und
   - aus den bestimmten Einzelspuren ($\varphi_{VL}$, $\varphi_{VR}$, $\varphi_{HL}$, $\varphi_{HR}$) und den bestimmten Abständen der Messköpfe einen Datensatz (Z) aus Achsvermessungsparametern ($Z_1$, $Z_2$, $Z_3$) zu berechnen und den Datensatz (Z) zur Darstellung bereitzustellen.

2. System (100) nach Anspruch 1,
   **dadurch gekennzeichnet, dass** der Datensatz (Z) einen, mehrere oder sämtliche der folgenden Achsvermessungsparameter ($Z_1$, $Z_2$, $Z_3$) umfasst:

   Eine Gesamtspur ($\gamma_{vorne}$, $Z_1$) für die Vorderachse (209) und/oder eine Gesamtspur ($\gamma_{hinten}$, $Z_1$) für die Hinterachse (211);
   eine Spurweite ($W_V$, $Z_2$) für die Vorderachse (209) und/oder eine Spurweite ($W_H$, $Z_2$) für die Hinterachse (211); und/oder
   einen Radstand ($X_R$, $Z_3$).

3. System (100) nach Anspruch 1 oder 2,
   **dadurch gekennzeichnet, dass** die Messeinrichtung (1) eine Auswerteinheit (11) umfasst, welche dazu eingerichtet ist, die Berechnung des Datensatzes (Z) vorzunehmen und den Datensatz (Z) zur Darstellung auf einer webbasierten Benutzeroberfläche bereitzustellen, vorzugsweise mittels einer drahtlosen Kommunikationsschnittstelle.

4. System (100) nach einem der vorstehenden Ansprüche,
   **dadurch gekennzeichnet, dass** die Messköpfe (3, 5, 7, 9) dazu eingerichtet sind, jeweils an einem Radnabenständer (101) montiert zu werden, welcher seinerseits dazu eingerichtet ist, reversibel lösbar mit der zugeordneten Radnabe (201, 202, 203, 204) verbunden zu werden.

5. System (100) nach einem der vorstehenden Ansprüche,
   **dadurch gekennzeichnet, dass** die Messköpfe der Messeinrichtung (1) an der Vorderachse (209) und/oder an der Hinterachse (211)

   - für die erste Fahrzeugseite (205) einen ersten Messkopf (3, 5) aufweisen, welcher zwei horizontal in einem vorgegebenen Abstand zueinander angeordnete Abstandsmessaufnehmer (13) aufweist, welche in Richtung der Radnabe (201, 202) ausgerichtet sind, und
   - für die zweite Fahrzeugseite (207) einen zweiten Messkopf (7, 9) aufweisen, welcher mindestens eine, vorzugsweise zwei, ebenfalls horizontal, vorzugsweise in demselben vorgegebenen Abstand, zueinander beabstandete Reflexionsflächen (23) aufweist, welche in Richtung der Radnabe (203, 204) ausgerichtet und zur Reflexion von Messsignalen der Abstandsmessaufnehmer (13) eingerichtet sind.

6. System (100) nach Anspruch 5,
   **dadurch gekennzeichnet, dass** die Abstandsmessaufnehmer (13) als optische Sensoren, vorzugsweise als Laserabstandssensoren, LIDAR-Sensoren, oder als Radarsensoren, oder (Ultra-) Schallsensoren ausgebildet sind.

7. System (100) nach einem der vorstehenden Ansprüche,

   **dadurch gekennzeichnet, dass** wenigstens einer der Messköpfe (3, 5) auf der ersten Fahrzeugseite (205) einen horizontal und senkrecht zur Radnabe (201, 202) ausgerichteten Strahl-Emitter (15) aufweist, und wenigstens einer der Messköpfe (3, 5) auf der ersten Fahrzeugseite einen horizontal und senkrecht zur Radnabe ausgerichteten Strahl-Detektor (17) zur Bestimmung der Auftreffposition des emittierten Strahls (19) auf dem Messkopf (3, 5) aufweist,

wobei vorzugsweise beide Messköpfe (3, 5) auf der ersten Fahrzeugseite einen solchen Strahl-Emitter (15) und einen solchen Strahl-Detektor (17) aufweisen.

**8.** System (100) nach einem der vorstehenden Ansprüche,

**dadurch gekennzeichnet, dass** wenigstens einer der Messköpfe (7, 9) auf der zweiten Fahrzeugseite (207) einen horizontal und senkrecht zur Radnabe (203, 204) ausgerichteten Strahl-Emitter (15) aufweist, und wenigstens einer der Messköpfe (7, 9) auf der zweiten Fahrzeugseite einen horizontal und senkrecht zur Radnabe (203, 204) ausgerichteten Strahl-Detektor (17) zur Bestimmung der Auftreffposition des emittierten Strahls auf dem Messkopf (7, 9) aufweist,

wobei vorzugsweise beide Messköpfe (7, 9) auf der zweiten Fahrzeugseite (207) einen solchen Strahl-Emitter (15) und einen solchen Strahl-Detektor (17) aufweisen.

**9.** System (100) nach Anspruch 7 oder 8,
**dadurch gekennzeichnet, dass** der Strahl-Emitter (15) dazu eingerichtet ist, einen gepulsten Strahl (19) zu emittieren, vorzugsweise einen pulsweitenmodulierten Strahl, und der Strahl-Detektor (17) dazu eingerichtet ist, eintreffende Strahlen (19) mit dem korrespondieren Puls, vorzugsweise der korrespondierenden Modulation, zu detektieren.

**10.** System (100) nach einem der Ansprüche 7 bis 9,

**dadurch gekennzeichnet, dass** der Strahl-Detektor (17) ein Fotodioden-Array (21) aufweist, wobei die Dioden (25) des Arrays einen vorbestimmten Abstand (33) zueinander aufweisen, und wobei der Strahl-Detektor (17) eine Streulinse (27) aufweist, welche den Dioden (25) vorgeschaltet und dazu eingerichtet ist, den eintreffenden Strahl (19) auf eine Querschnittsfläche (29) aufzuweiten, welche mehrere der Dioden (25) überstreicht, vorzugsweise 5 oder mehr Dioden, besonders bevorzugt 7 oder mehr Dioden,

wobei vorzugsweise die Messeinrichtung (1) dazu eingerichtet ist, die Dioden (25) einzeln abzutasten und aus den erfassten Signalen die Auftreffposition des Strahls (19) auf dem Array (21) zu interpolieren.

**11.** System (100) nach einem der Ansprüche 9 bis 10,
**dadurch gekennzeichnet, dass** die Messeinrichtung (1) dazu eingerichtet ist, ein Frequenzspektrum des Umgebungslichts zu ermitteln und in Abhängigkeit des ermittelten Spektrums die Modulationsfrequenz des Pulses für den Strahl-Emitter (15) und den Strahl-Detektor (17) auszuwählen.

**12.** Messkopf (3, 5, 7, 9) für ein System (100) zur Achsvermessung an einem Kraftahrzeug (200), insbesondere einem Rennsportfahrzeug, welches eine erste Fahrzeugseite (205), eine gegenüberliegende zweite Fahrzeugseite (207), eine Vorderachse (209) mit zwei vorderen Radnaben (201, 204) und eine Hinterachse (211) mit zwei hinteren Radnaben (202, 203) aufweist, insbesondere für ein System (100) nach einem der vorstehenden Ansprüche, mit einer Montagsschnittstelle (12) zur Installation in einer vorgegebenen Relativposition zu einer Radnabe (201, 202, 203, 204), vorzugsweise mittelbar oder unmittelbar an einer Radnabe, besonders bevorzugt an einem Radnabenständer (101), welcher seinerseits dazu eingerichtet ist, reversibel lösbar mit der zugeordneten Radnabe (201, 202, 203, 204) verbunden zu werden, wobei der Messkopf (3, 5, 7, 9)

- einen Strahl-Emitter (15) aufweist, der dazu eingerichtet ist, horizontal und senkrecht zur Radnabe (201, 202, 203, 204) gerichtete Strahlung (19) zu emittieren, und
- einen horizontal und senkrecht zur Radnabe (201, 202, 203, 204) ausgerichteten Strahl-Detektor (17) aufweist, der dazu eingerichtet ist, die Auftreffposition eines gerichteten Strahls (19) zu bestimmen.

**13.** Messkopf (3, 5; 7, 9) nach Anspruch 12,
**dadurch gekennzeichnet, dass** der Messkopf (3, 5; 7, 9)

- zwei horizontal in einem vorgegebenen Abstand zueinander beabstandete Abstandsmessaufnehmer (13) aufweist, welche in Richtung der Radnabe (201, 202) ausgerichtet sind und dazu eingerichtet sind, den Abstand zu einer korrespondierend ausgerichteten Reflexionsfläche (23) an einem beabstandet angeordneten Messkopf (7, 9) zu bestimmen; oder

- wenigstens eine, vorzugsweise zwei horizontal in einem, vorzugsweise demselben, vorgegebenen Abstand zueinander beabstandete Reflexionsflächen (23) aufweist, welche in Richtung der Radnabe (203, 204) ausgerichtet und zur Reflexion von Messsignalen der Abstandsmessaufnehmer (13) eingerichtet sind.

**14.** Messkopf (3, 5, 7, 9) nach Anspruch 12 oder 13,

**dadurch gekennzeichnet, dass** der Messkopf (3, 5, 7, 9) eine Auswerteinheit (11) aufweist, welche mit einem oder mehreren weiteren Messköpfen (3, 5, 7, 9) signalleitend verbindbar ist, und dazu eingerichtet ist, auf Basis der vom Messkopf (3, 5, 7, 9) selbst sowie von dem oder den weiteren Messköpfen (3, 5, 7, 9) bestimmten Abstände und Auftreffpositionen die Einzelspuren ($\varphi_{VL}$, $\varphi_{VR}$, $\varphi_{HL}$, $\varphi_{HR}$) einer oder mehrerer Radnaben (201, 202, 203, 204) zu bestimmen, und
aus den bestimmten Einzelspuren ($\varphi_{VL}$, $\varphi_{VR}$, $\varphi_{HL}$, $\varphi_{HR}$) und den bestimmten Abständen der Messköpfe einen Datensatz (Z) aus Achsvermessungsparametern ($Z_1$, $Z_2$, $Z_3$) zu berechnen und zur Darstellung bereitzustellen, vorzugsweise auf einer webbasierten Benutzeroberfläche, weiter vorzugsweise mittels einer drahtlosen Kommunikationsschnittstelle.

**15.** Verfahren zur Achsvermessung an einem Kraftahrzeug (200), insbesondere einem Rennsportfahrzeug, welches eine erste Fahrzeugseite (205), eine gegenüberliegende zweite Fahrzeugseite (207), eine Vorderachse (209) mit zwei vorderen Radnaben (201, 204) und eine Hinterachse (211) mit zwei hinteren Radnaben (201, 204) aufweist, umfassend die Schritte:

- Installieren von vier Messköpfen (3, 5, 7, 9) an in einer vorgegebenen Relativposition zu den Radnaben (201, 202, 203, 204);
- Bestimmen, mittels Emission und Detektion senkrecht zu den Radnaben gerichteter Strahlung (19), der Einzelspur ($\varphi_{VL}$, $\varphi_{VR}$, $\varphi_{HL}$, $\varphi_{HR}$) jeder Radnabe (201, 202, 203, 204) relativ zu einer Längsachse (X) des Fahrzeugs (200);
- Bestimmen der Abstände der Messköpfe (3, 5, 7, 9) in Richtung der Radnaben (201, 202, 203, 204) für die vorderen Radnaben (201, 204) und die hinteren Radnaben (202, 203);
- Berechnen eines Datensatzes (Z) aus Achsvermessungsparametern ($Z_1$, $Z_2$, $Z_3$) aus den bestimmten Einzelspuren ($\varphi_{VL}$, $\varphi_{VR}$, $\varphi_{HL}$, $\varphi_{HR}$) und den bestimmten Abständen der Messköpfe (3, 5, 7, 9); und
- Bereitstellen des Datensatzes (Z) zur Darstellung,

wobei vorzugsweise in dem Verfahren ein System (100) nach einem der Ansprüche 1 bis 11 verwendet wird, und/oder ein oder mehrere Messköpfe (3, 5, 7, 9) nach einem der Ansprüche 12 bis 14.

Fig. 1

Fig. 2

Fig. 3

EP 4 664 065 A1

**Fig. 4a**

Fig. 4b

Fig. 5

Fig. 6

Fig. 7

D1 D2 D3 D4 D5 D6 D7 D8 D9 D10 D11 D12 D13 D14 D15 D16 D17 D18 D19 D20 D21 D22 D23 D24 D25 D26 D27 D28 D29 D30 D31 D32

E 33 35 37

Europäisches
Patentamt
European
Patent Office
Office européen
des brevets

## EUROPÄISCHER RECHERCHENBERICHT

**Nummer der Anmeldung**

EP 25 18 3050

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 696 19 733 T2 (HUNTER ENG CO [US]; JANUARY DANIEL B [US]) 22. August 2002 (2002-08-22) | 1-10, 12-15 | INV. G01B11/275 |
| Y | * Seite 7, Zeile 27 - Seite 11, Zeile 9; Abbildungen 1,3C,5A * * Seite 15, Zeile 27 - Seite 26, Zeile 36 * | 11 | |
| | ----- | | |
| Y | EP 2 597 454 A1 (UNIV MADRID CARLOS III [ES]) 29. Mai 2013 (2013-05-29) * Absätze [0001], [0015] - [0023], [0025] * | 11 | |
| | ----- | | |

**RECHERCHIERTE SACHGEBIETE (IPC)**

G01B

Der vorliegende Recherchenbericht wurde für alle Patentansprüche erstellt

| Recherchenort | Abschlußdatum der Recherche | Prüfer |
|---|---|---|
| München | 28. Oktober 2025 | Biedermann, Benjamin |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 18 3050

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2025

| Im Recherchenbericht angeführtes Patentdokument | | Datum der Veröffentlichung | Mitglied(er) der Patentfamilie | | Datum der Veröffentlichung |
|---|---|---|---|---|---|
| DE 69619733 | T2 | 22-08-2002 | DE 69619733 T2 | | 22-08-2002 |
| | | | EP 0749563 A1 | | 27-12-1996 |
| | | | US 5488472 A | | 30-01-1996 |
| | | | WO 9621840 A1 | | 18-07-1996 |
| EP 2597454 | A1 | 29-05-2013 | EP 2597454 A1 | | 29-05-2013 |
| | | | ES 2377372 A1 | | 27-03-2012 |
| | | | WO 2012010734 A1 | | 26-01-2012 |

EPO FORM P0461

Für nähere Einzelheiten zu diesem Anhang : siehe Amtsblatt des Europäischen Patentamts, Nr.12/82